# EUROPÄISCHE PATENTSCHRIFT

(11) **EP 3 906 389 B1**
(45) Veröffentlichungstag und Bekanntmachung des Hinweises auf die Patenterteilung: **20.12.2023**
(21) Anmeldenummer: 21714628.1
(22) Anmeldetag: 15.02.2021
(51) Int. Cl.: G01B 11/26, G01B 21/04

(54) **OPTISCHE POSITIONIERHILFE FÜR EINEN ABSTANDSSENSOR, ABSTANDSMESSSYSTEM UND ENTSPRECHENDES VERFAHREN**
OPTICAL POSITIONING AID FOR A DISTANCE SENSOR, DISTANCE MEASURING SYSTEM AND CORRESPONDING METHOD
AIDE AU POSITIONNEMENT OPTIQUE POUR UN CAPTEUR DE DISTANCE, SYSTÈME DE MESURE DE DISTANCE ET PROCÉDÉ CORRESPONDANT

(30) Priorität: 25.03.2020 DE 102020203857
(43) Veröffentlichungstag der Anmeldung: 10.11.2021
(73) Patentinhaber: Micro-Epsilon Optronic GmbH, 01465 Dresden-Langebrück (DE)
(72) Erfinder: STAUTMEISTER, Torsten, 01465 Dresden-Langebrück (DE); SCHUELLER, Tobias, 01109 Dresden (DE); ROESSLER, Marco, 01454 Radeberg (DE)
(74) Vertreter: Ullrich & Naumann PartG mbB
(86) Internationale Anmeldenummer: PCT/DE2021/200014
(87) Internationale Veröffentlichungsnummer: WO 2021/190713

(56) Entgegenhaltungen:
- DE-A1-102016 115 252
- DE-T2- 69 708 369
- DE-T5-112011 100 296
- DE-T5-112018 000 511

## Beschreibung

Die Erfindung betrifft eine optische Positionierhilfe für einen Abstandssensor zum Unterstützen eines Positionierens des Abstandssensors relativ zu einem Messobjekt. Die Erfindung betrifft ferner ein Abstandsmesssystem sowie ein entsprechendes Verfahren.

In vielen Bereichen der Technik nehmen Abstandssensoren eine besondere Bedeutung ein. Mit Abstandssensoren werden Abstände zwischen dem Sensor und einem Messobjekt gemessen. Aus einem gemessenen Abstand können nicht nur Informationen über die Entfernung eines Messobjekts zu dem Sensor gewonnen werden, sondern - abhängig von den durchgeführten Auswertungen - auch Informationen über ein Profil des Messobjekts, eine Schichtdicke, eine Spaltbreite, eine Oberflächenqualität oder auch nur über das Vorhandensein eines Messobjekts, um lediglich einige typische Beispiele zu nennen. Entsprechend vielfältig sind die bekannten Sensortechnologien und die Möglichkeiten der Auswertung von Sensorsignalen. Je nach Anwendungsbereich und zu vermessenden Messobjekten werden optische Sensoren (beispielsweise Interferometrie-Sensoren, konfokalchromatische Sensoren oder Triangulationssensoren), kapazitive oder induktive Sensoren verwendet.

Abstandssensoren weisen einen Abstandsmessbereich und einen lateralen Messbereich auf. Der Abstandsmessbereich gibt an, von welchem Abstand zwischen Messobjekt und Abstandssensor (minimaler Messabstand) bis zu welchem Abstand (maximaler Messabstand) Messungen möglich sind. Der minimale Messabstand kann bis zu dem Abstandssensor reichen. In der Praxis ist der minimale Messabstand jedoch meist von dem Abstandssensor beabstandet. Der laterale Messbereich gibt an, in welchem Bereich quer zu dem Abstandmessbereich ein Messobjekt vermessen werden kann.

Bei einigen Sensortechnologien ist der Abstandsmessbereich und/oder der laterale Messbereich vergleichsweise einfach zu erkennen. So verwenden Triangulationssensoren beispielsweise Licht im sichtbaren Bereich, sodass eine laterale Positionierung eines Messobjekts einfach möglich ist. Dennoch ist auch in diesem Fall der Abstandsmessbereich häufig lediglich zu erahnen. Bei Sensoren, bei denen eine Messung außerhalb des sichtbaren Bereichs erfolgt, beispielsweise bei einem Messlicht im Infrarotbereich oder bei kapazitiven oder induktiven Sensoren, ist eine korrekte Positionierung eines Messobjekts lediglich unter Verwendung eines Datenblatts und einem Metermaß (oder einem anderen Vergleichsmessgerät) möglich.

Da bei einer Montage eines Abstandssensors in einer Maschine oder einer Anlage nicht selten eine präzise Positionierung des Abstandssensors erforderlich ist, wird die Montage häufig zu einer aufwendigen und fehleranfälligen Tätigkeit. Diese Problematik wird noch weiter verschärft, wenn der Abstandsmessbereich und/oder der laterale Messbereich klein ist, sich beispielsweise der Abstandsmessbereich lediglich über wenige Millimeter erstreckt und der laterale Messbereich weniger als einen Millimeter breit ist. In solchen Fällen ist eine Positionierung ohne weitere Hilfsmittel praktisch nicht möglich.

In der Praxis sind daher Messsysteme bekannt, die Positionierhilfen aufweisen, um einen Einrichter bei der Positionierung des Abstandssensors relativ zu einem Messobjekt zu unterstützen. Hierzu weist eine Controllereinheit des Messsystems eine Anzeige auf, die eine Einordnung eines gemessenen Abstandswerts ermöglicht. Diese Anzeige kann beispielsweise durch eine grüne LED (LichtEmittierende Diode) anzeigen, wenn ein gemessener Abstandswert bei einer Messbereichsmitte liegt. Auf diese Weise kann der Einrichter den Abstandssensor und das Messobjekt relativ präzise zueinander positionieren. Nachteilig hieran ist, dass der Einrichter stets seinen Blick zwischen dem Abstandssensor und der Controllereinheit hin- und herwechseln muss. Eine durchgeführte Anpassung des Abstandssensors kann erst dann verifiziert werden, wenn die Anzeige der Controllereinheit konsultiert worden ist. Dadurch kann der Einrichtungsvorgang sehr aufwendig und zeitintensiv werden.

Der vorliegenden Erfindung liegt die Aufgabe zugrunde, eine Positionierhilfe, ein Abstandsmesssystem und ein Verfahren der eingangs genannten Art derart auszugestalten und weiterzubilden, dass ein möglichst einfaches Positionieren eines Abstandssensors relativ zu einem Messobjekt ermöglicht wird.

Erfindungsgemäß wird die voranstehende Aufgabe durch die Merkmale des Anspruchs 1 gelöst. Danach umfasst die in Rede stehende Positionierhilfe:
eine Lichtquelle zum Erzeugen eines Einstelllichtstrahls, wobei der Einstelllichtstrahl eine Wellenlänge im sichtbaren Bereich aufweist und zum Erzeugen eines Lichtflecks auf einem Messobjekt geeignet ist, und
eine Steuereinheit, die einen Abstandseingang aufweist und zum Steuern mindestens einer Eigenschaft des Einstelllichtstrahls kommunizierend mit der Lichtquelle verbunden ist,
wobei die Steuereinheit dazu ausgebildet ist, einen in den Abstandseingang eingegebenen Eingabewert zu bewerten und basierend auf einem Bewertungsergebnis mindestens eine Eigenschaft des Einstelllichtstrahls derart zu beeinflussen, dass der Einstelllichtstrahl Rückschlüsse auf den Eingabewert erlaubt.

Bezüglich des Abstandsmesssystems ist die voranstehende Aufgabe durch die weiteren Merkmale des Anspruchs 1 gelöst. Danach umfasst das in Rede stehende Abstandsmesssystem:
einen Abstandssensor zum Messen eines Abstands zwischen dem Abstandssensor und einem Messobjekt und
eine erfindungsgemäße optische Positionierhilfe,
wobei der Abstandssensor kommunizierend mit der Positionierhilfe verbunden ist und einen Eingabewert, der repräsentativ für einen gemessenen Abstandswert ist, in den Abstandseingang der Positionierhilfe eingibt.

Hinsichtlich des Verfahrens ist die voranstehende Aufgabe durch die Merkmale des Anspruchs 9 gelöst. Danach umfasst das in Rede stehende Verfahren die Schritte:
Erzeugen eines Eingabewerts durch Messen eines Abstands zwischen dem Messobjekt und dem Abstandssensor,
Bewerten des Eingabewerts zum Erzeugen eines Bewertungsergebnisses,
Erzeugen eines Einstelllichtstrahls mittels einer Lichtquelle einer Positionierhilfe und
Lenken des Einstelllichtstrahls auf das Messobjekt zum Erzeugen eines Lichtflecks auf dem Messobjekt,
wobei mindestens eine Eigenschaft des Einstelllichtstrahls basierend auf dem Bewertungsergebnis derart beeinflusst wird, dass der Einstelllichtstrahl Rückschlüsse auf den Eingabewert erlaubt.

In erfindungsgemäßer Weise ist zunächst erkannt worden, dass eine einfache Positionierbarkeit eines Abstandssensors dadurch erreicht werden kann, dass Informationen über einen gemessenen Abstandswert direkt auf dem Messobjekt erkennbar gemacht werden. Hierzu wird erfindungsgemäß ein Einstelllichtstrahl genutzt, der derart ausgebildet, dass er bei Auftreffen auf einem Messobjekt einen sichtbaren Lichtfleck erzeugt. Der Einstelllichtstrahl weist hierzu mindestens eine Wellenlänge im sichtbaren Bereich auf, d. h. bei einer Wellenlänge zwischen 380 nm und 750 nm. Zudem ist der Einstelllichtstrahl basierend auf einem eingegebenen Abstandswert derart in mindestens einer Eigenschaft beeinflussbar, dass aus dem Betrachten des Lichtflecks Rückschlüsse auf den eingegebenen Abstandswert gezogen werden können. Dies wird dadurch erreicht, dass sich ein Beeinflussen der mindestens einen Eigenschaft des Einstelllichtstrahls in dem sichtbaren Bereich auswirkt und damit eine mit bloßem Auge erkennbare Auswirkung auf den Lichtfleck auf dem Messobjekt hat.

Zum Erzeugen eines derartigen Einstelllichtstrahls ist erfindungsgemäß eine Positionierhilfe bereitgestellt, die eine Lichtquelle und eine Steuereinheit umfasst. Diese Positionierhilfe kann zusammen mit einem Abstandssensor (und eventuell weiteren Baugruppen) ein Abstandsmesssystem bilden. Die Lichtquelle erzeugt den Einstelllichtstrahl, der auf ein Messobjekt gelenkt wird und dort einen Lichtfleck erzeugen kann. Diese Anforderung bedingt, dass die Lichtquelle zum Erzeugen eines ausreichend fokussierten Lichtstrahls ausgebildet ist. Die Steuereinheit weist einen Abstandseingang auf, der mit einem Abstandssensor verbunden sein kann und in den ein Eingabewert eingegeben wird. Die Steuereinheit ist kommunizierend mit der Lichtquelle verbunden und zum Steuern mindestens einer Eigenschaft des Einstelllichtstrahls ausgebildet. Die Steuereinheit bewertet einen in den Abstandseingang eingegebenen Eingabewert und erzeugt bei dieser Bewertung ein Bewertungsergebnis. Basierend auf dem Bewertungsergebnis beeinflusst die Steuereinheit die Lichtquelle derart, dass eine oder mehrere der mindestens einen Eigenschaft des Einstelllichtstrahls Rückschlüsse auf den Eingabewert erlaubt. Auf diese Weise kann aus dem Lichtfleck auf dem Messobjekt abgelesen werden, wie der Eingabewert den bei der Bewertung des Eingabewerts genutzten Bewertungskriterien entspricht.

Der Einstelllichtstrahl kann durch einen monochromatischen Lichtstrahl gebildet sein, d.h. der Einstelllichtstrahl weist lediglich eine einzelne Wellenlänge oder einen engen Wellenlängenbereich (beispielsweise schmäler als 10 nm oder schmäler als 5 nm) auf. Es ist aber auch denkbar, dass der Einstelllichtstrahl polychromatisch ist, d.h. mehrere diskrete Wellenlängen und/oder einen oder mehrere Wellenlängenbereiche aufweist. Solange mindestens eine Wellenlänge des Einstelllichtstrahls im sichtbaren Bereich liegt und der Einstelllichtstrahl bei Verändern einer Eigenschaft des Einstelllichtstrahls mit bloßem Auge erkennbare Änderungen eines Lichtflecks auf dem Messobjekt hervorruft, kann ein derartiger Einstelllichtstrahl im Zusammenhang mit der vorliegenden Erfindung genutzt werden.

Prinzipiell kann die Positionierhilfe und damit der Lichtfleck auf dem Messobjekt auf unterschiedliche Weise positioniert sein. Insbesondere bei einer Positionierhilfe, die als externe Einheit an einem Abstandssensor angebracht ist, dürfte der Lichtfleck beabstandet von dem lateralen Messbereich des Abstandssensors angeordnet sein. Solange gewährleistet ist, dass ein Einrichter während einer Positionierung des Abstandssensors den Lichtfleck ohne ausgiebige Änderung seiner Blickrichtung erkennen kann, kann eine derartige Position des Lichtflecks genutzt werden. Dabei dürfte es sich empfehlen, wenn ein Bewegen des Abstandssensors und damit ein Verschwenken des Messbereichs auch zu einem Verschwenken des Einstelllichtstrahls führt, d.h. wenn Bewegungen des Abstandssensors und Bewegungen der Positionierhilfe gekoppelt sind. In einer bevorzugten Ausgestaltung ist der Lichtfleck innerhalb des lateralen Messbereichs des Abstandssensors angeordnet. Dies dürfte in den meisten Fällen bedeuten, dass der Lichtfleck auf der optischen Achse des Messlichts liegt.

Auch die Steuereinheit kann auf unterschiedliche Weise ausgebildet sein. Die Steuereinheit kann durch reine Schaltungstechnik implementiert sein, d.h. durch eine Verschaltung diskreter Bauteile (wie Widerstände, Kondensatoren, Transistoren) und gegebenenfalls unter Nutzung integrierter Schaltkreise (wie Logikgatter oder Komparatoren). In einer Ausgestaltung ist die Steuereinheit jedoch durch eine Kombination aus Hardware und Software implementiert. Hierzu weist die Steuereinheit einen Mikroprozessor, einen Arbeitsspeicher, einen Programmspeicher und entsprechende Schnittstellen auf, wobei in dem Programmspeicher ein Computerprogramm abgelegt ist, dessen Ausführung die Steuereinheit zum Durchführen der jeweiligen Aufgaben befähigt.

Die Steuereinheit kann ausschließlich für die Positionierhilfe zuständig sein. Denkbar ist aber auch, dass die Steuereinheit Bestandteil eines anderen und/oder übergeordneten Systems ist. So kann die Steuereinheit bei Verwendung der Positionierhilfe in einem Messsystem beispielsweise sowohl Aufgaben für die Positionierhilfe als auch Aufgaben für den Abstandssensor oder andere Bestandteile des Messsystems erfüllen.

In einer Ausgestaltung kann die mindestens eine Eigenschaft des Einstelllichtstrahls durch eine Wellenlänge des Einstelllichtstrahls gebildet sein. Dies bedeutet, dass die Steuereinheit derart auf die Lichtquelle einwirken kann, dass sich eine Farbe des Einstelllichtstrahls abhängig von dem Eingabewert erkennbar ändert. So kann der Einstelllichtstrahl beispielsweise rot sein, wenn ein in den Abstandseingang eingegebener Eingabewert außerhalb eines Sollbereichs, beispielsweise außerhalb eines Abstandsmessbereichs oder außerhalb einer Messbereichsmitte, liegt. Wenn der Eingabewert darauf schließen lässt, dass der Abstand zwischen Abstandssensor und Messobjekt innerhalb des Abstandsmessbereichs oder nahe bei der Messbereichsmitte liegt, so kann der Einstelllichtstrahl beispielsweise auf grün wechseln. Es ist auch denkbar, dass die Wellenlänge kontinuierlich oder in mehreren Stufen verändert wird, beispielsweise in mehreren Stufen von rot auf grün. In diesem Fall würde die Steuereinheit einen Eingabewert in mehrere Bereiche klassifizieren und abhängig von einem erkannten Bereich eine Farbe des Einstelllichtstrahls auswählen und die Lichtquelle entsprechend ansteuern.

In einer anderen Ausgestaltung kann die mindestens eine Eigenschaft des Einstelllichtstrahls eine Intensität umfassen. Dies bedeutet, dass die Intensität des Einstelllichtstrahls in Abhängigkeit des Eingabewerts und dessen Bewertung verändert wird. So kann der Einstelllichtstrahl beispielsweise unterschiedlich hell gesteuert werden, sodass bei Erreichen eines Sollwerts eine maximale Intensität vorhanden ist.

In einer anderen Ausgestaltung umfasst die mindestens eine Eigenschaft des Einstelllichtstrahls ein Variationsmuster. Dies bedeutet, dass eine andere Eigenschaft des Einstelllichtstrahls in unterschiedlichen Mustern verändert wird. Denkbar ist beispielsweise, dass die Intensität des Einstelllichtstrahls abhängig von einer Bewertung eines Eingabewertes geändert wird. So kann der Einstelllichtstrahls bei einem Eingabewert, der weit von dem Sollwert entfernt ist, über weite Teile einer Variationsperiode eine niedrige Intensität aufweisen, beispielsweise gleich 0. Je näher der Eingabewert an den Sollwert heranrückt, desto mehr könnte der Verhältnis zwischen niedriger und hoher Intensität in Richtung hoher Intensität verschoben werden. Auf diese Weise wird durch Variation der Intensität gut erkennbar, wie nahe der Eingabewert an einem Sollwert liegt. Ähnliches könnte auch bezüglich der Wellenlänge vorgenommen werden, indem beispielsweise zwischen zwei oder mehr Wellenlängen/Wellenlängenbereichen gewechselt wird.

In einer anderen Ausgestaltung umfasst die mindestens eine Eigenschaft des Einstelllichtstrahls einer Variationsfrequenz des Einstelllichtstrahls. Dies bedeutet, dass eine andere Eigenschaft des Einstelllichtstrahls verändert wird und dass die Häufigkeit der Veränderung abhängig von dem Eingabewert beeinflusst wird. So kann beispielsweise die Intensität des Eingabelichtstrahls mit einer niedrigen Frequenz zwischen einer niedrigen und einer hohen Intensität wechseln, beispielsweise einmal pro Sekunde oder alle zwei Sekunden, wenn der Eingabewert weit von einem Sollwert oder einem Sollbereich entfernt ist. Je näher der Eingabewert an den Sollwert bzw. Sollbereich heranrückt, desto schneller könnte zwischen den beiden Intensitätswerten gewechselt werden. Dabei könnten zwei oder auch mehr Variationsfrequenzen genutzt werden. Auf diese Weise lässt sich erkennen, wie weit der Eingabewert von dem Sollwert entfernt ist. Entsprechend könnte bei einem Wechsel eine Wellenlänge vorgegangen werden.

Die voran genannten Ausgestaltungen zur Variation von Eigenschaften des Einstelllichtstrahls lassen sich auf beliebige Weise kombinieren. Dabei können verschiedenen Eigenschaften unterschiedliche Bedeutungen zukommen. So kann beispielsweise der Einstelllichtstrahl eine rote Farbe annehmen, wenn der Eingabewert außerhalb eines Messbereichs ist. Sobald der Eingabewert einen Messbereich erreicht könnte auf eine grüne Farbe gewechselt werden. Je näher der Eingabewert einer Messbereichsmitte kommt, desto mehr könnte das Verhältnis zwischen einer niedrigen Intensität und einer hohen Intensität in Richtung hoher Intensität verschoben werden. Einem Fachmann werden die Möglichkeiten und Kombinierbarkeit der verschiedenen Ansätze ohne Weiteres ersichtlich sein.

Die Lichtquelle kann prinzipiell auf verschiedene Weise implementiert sein. Wesentlich dabei ist, dass die Lichtquelle zur Abgabe eines ausreichend fokussierten Lichtstrahls in der Lage ist und ausreichend gut steuerbar ist. Diese Anforderungen können aber durch verschiedene Lichterzeuger - eventuell in Kombination mit nachgeschalteten optischen Mitteln - erfüllt werden. Mögliche Ausgestaltungen der Lichtquelle umfassen eine lichtemittierende Diode (LED) oder eine Laser-Diode. Dabei kann dem eigentlichen Lichterzeuger der Lichtquelle eine Fokussiereinrichtung zum Beeinflussen des Strahlengangs des Einstelllichtstrahls nachgeordnet sein.

Darüber hinaus kann die Lichtquelle weitere optische Mittel umfassen. Derartige optische Mittel können beispielsweise Farb- oder Polarisationsfilter umfassen. In einer Weiterbildung sind derartige optische Mittel dazu ausgebildet, eine oder mehrere der Eigenschaften des Einstelllichtstrahls zu beeinflussen. So kann ein derartiges optisches Mittel beispielsweise dazu verwendet werden, die Intensität des Einstelllichtstrahls zu verändern.

Der Eingabewert, der in den Abstandseingang der Steuereinheit der Positionierhilfe eingegeben wird, kann verschiedentlich gebildet sein und verschiedene Bedeutungen haben. Wichtig ist, dass der Eingabewert einen Bezug zu einem erfassten Abstand aufweist. Wie konkret dieser Bezug gebildet ist, ist von untergeordneter Bedeutung.

In einer Ausgestaltung ist der Eingabewert durch einen Abstandswert gebildet. Dieser Abstandswert kann direkt mit einem Abstand zwischen Messobjekt und Abstandssensor korreliert sein und direkt den durch den Abstandssensor gemessenen Abstand bezeichnen.

In einer anderen Ausgestaltung ist der Eingabewert durch ein Bewertungsmaß gebildet, das für einen gemessenen Abstand repräsentativ ist. So kann das Bewertungsmaß beispielsweise größer als 1 sein, wenn ein gemessener Abstandswert oberhalb eines Messbereichs des Abstandssensors liegt. Das Bewertungsmaß könnte einen Dezimalwert zwischen 0 und 1 annehmen, wenn der erfasste Abstand innerhalb des Messbereichs liegt. Dabei könnte eine lineare Abbildung (oder auch ein anderer eindeutiger Zusammenhang) zwischen Abstandswert und Bewertungsmaß genutzt werden. Mit einem Wert kleiner oder gleich 0 könnte ein Abstand kleiner als der minimale Messabstand kenntlich gemacht werden. Prinzipiell könnten auch weitere Bewertungsmaße, die für einen gemessenen Abstand repräsentativ sind, verwendet werden, wie beispielsweise ein Logikwert.

Der Eingabewert kann in einer weiteren Ausgestaltung auch eine Differenz eines Abstandswerts relativ zu einem Referenzpunkt innerhalb eines Abstandsmessbereichs des Abstandssensors gebildet sein. Dieser Referenzpunkt kann beispielsweise eine Messbereichsmitte, ein Messbereichsanfang oder ein Messbereichsende sein. Eine derart gebildete Differenz kann als absoluter Wert vorliegen oder auf die Größe des Messbereichs normiert sein.

Die erfindungsgemäße Positionierhilfe kann Bestandteil eines erfindungsgemäßen Abstandsmesssystems sein. Hierzu umfasst das erfindungsgemäße Abstandsmesssystem zusätzlich zu der optischen Positionierhilfe einen Abstandssensor zum Messen eines Abstands zwischen dem Abstandssensor und einem Messobjekt. Der Abstandssensor ist dabei kommunizierend mit der Positionierhilfe verbunden und gibt einen Eingabewert in den Abstandseingang der Positionierhilfe ein. Hierzu kann der Abstandssensor eine entsprechend ausgestaltete Einheit aufweisen, die einen für die Positionierhilfe geeigneten Eingabewert erzeugt und an die Positionierhilfe ausgibt.

In dem erfindungsgemäßen Abstandsmesssystem können Positionierhilfe und Abstandssensor durch zwei separate Einheiten gebildet sein, die vorzugsweise miteinander (fest oder auch lösbar) verbunden sind. So könnte die Positionierhilfe an einem Gehäuse des Abstandssensors befestigt sein. In einer bevorzugten Ausgestaltung bilden Positionierhilfe und Abstandssensor jedoch eine Einheit, was sich üblicherweise durch eine Anordnung von Positionierhilfe und Abstandssensor in einem gemeinsamen Gehäuse ausdrücken dürfte.

Der Einstelllichtstrahl kann prinzipiell auf beliebige Weise relativ zu dem Messbereich des Abstandssensors angeordnet sein, solange der Einstelllichtstrahl einen erkennbaren Lichtfleck auf dem Messobjekt erzeugt. In einer bevorzugten Ausgestaltung sind Einstelllichtstrahl und Messbereich des Abstandssensors jedoch gekoppelt. Dies bedeutet in einer Ausgestaltung, dass der Einstelllichtstrahl den Messbereich des Abstandssensors, insbesondere den lateralen Messbereich des Abstandssensors, kennzeichnet.

Prinzipiell kann der Abstandssensor des erfindungsgemäßen Abstandsmesssystems auf verschiedenste Weise gebildet sein und nach verschiedensten Sensortechnologien arbeiten. Solange der Abstandssensor zum Erzeugen und Ausgeben eines geeigneten Eingabewertes für die Positionierhilfe in der Lage ist, ist dieser Abstandssensor prinzipiell für das erfindungsgemäße Abstandsmesssystem geeignet.

Erfindungsgemäß ist der Abstandssensor durch einen optischen Sensor gebildet. Dies bedeutet, dass der Abstandssensor ein Messlicht aussendet und basierend auf einem Detektionslicht, das durch Reflektion des Messlichts an einem Messobjekt entsteht, auf die Entfernung eines beleuchteten Punkts der Oberfläche des Messobjekts geschlossen wird. Dabei kann der optische Sensor als Interferometrie-Sensor, als konfokalchromatischer Sensor, als Triangulationssensor oder auf sonstige Weise ausgebildet sein. Derartige Sensoren sind in der Praxis hinlänglich bekannt.

In einer anderen Ausgestaltung, welche nicht Teil der beanspruchten Erfindung ist, ist der Abstandssensor durch einen kapazitiven Sensor gebildet. Derartige Sensoren messen die Beeinflussung einer Sensorkapazität durch ein in dem Messbereich des Sensors befindliches Messobjekt. Ein derartiger Sensor kann ebenfalls mit der optischen Positionierhilfe kombiniert werden, da der Einstelllichtstrahl die Messung des kapazitiven Sensors nicht beeinflusst.

In einer anderen Ausgestaltung, welche ebenfalls nicht Teil der beanspruchten Erfindung ist, ist der Abstandssensor durch einen induktiven Sensor gebildet. Ein induktiver Sensor erfasst den Einfluss eines Messobjekts auf eine Induktivität des Sensors, beispielsweise durch Erzeugung von Wirbelströmen in dem Messobjekt oder durch Veränderung der Permeabilität im Messbereich des Sensors. Auch mit derartigen Sensoren kann die optische Positionierhilfe vorteilhaft kombiniert werden.

Bei Verwendung eines optischen Sensors kann das Abstandsmesssystem erfindungsgemäß einen optischen Koppler umfassen, mit dem ein durch den Abstandssensor ausgesendeter Messlichtstrahl und der Einstelllichtstrahl gekoppelt werden. Auf diese Weise kann der Messlichtstrahl und der Einstelllichtstrahl in ein gemeinsames optisches Mittel eingekoppelt werden, sodass das gemeinsame optische Mittel sowohl Messlichtstrahl als auch Einstelllichtstrahl zu dem Messobjekt lenken kann. Dabei ist das gemeinsame optische Mittel vorzugsweise durch einen Lichtwellenleiter gebildet. Eine derartige Ausgestaltung ist dann besonders günstig einsetzbar, wenn das Abstandsmesssystem einen passiven Messkopf umfasst, von dem aus das Messlicht auf das Messobjekt gelenkt wird und der an dem Messobjekt reflektiertes Reflektionslicht wieder aufnimmt. Auch wenn durch die unterschiedlichen Wellenlängen des Einstelllichtstrahls und des Messlichtstrahls und durch die Optimierung der Messoptik auf den Messlichtstrahl optische Fehler (beispielsweise chromatische Fehler) eintreten dürften, kann auf diese Weise dennoch eine gute Koaxialität des Messlichtstrahls und des Einstelllichtstrahls erreicht werden.

Bei Verwendung eines optischen Sensors, der ein Messlicht im sichtbaren Bereich aussendet, kann in einer Weiterbildung der Messlichtstrahl als Einstelllichtstrahl verwendet werden. Zur Vermeidung einer negativen Beeinflussung der Messung des Abstandsensors kann ein Einstellmodus vorgesehen sein, während dessen eine der Eigenschaften des Mess-/Einstelllichtstrahls variiert wird. In diese Weiterbildung kann es sinnvoll sein, die Anzahl der beeinflussten Eigenschaft zu reduzieren.

Bei einem erfindungsgemäßen Verfahren, das zum Unterstützen eines Positionierens eines Abstandssensors relativ zu einem Messobjekt, unter Verwendung eines erfindungsgemäßen Abstandsmesssystems, eingesetzt werden kann, wird in einem ersten Schritt ein Eingabewert erzeugt. Das Erzeugen des Eingabewerts erfolgt durch Messen eines Abstandes zwischen dem Messobjekt und dem Abstandssensor. In einem nächsten Schritt wird dieser Eingabewert bewertet und dabei ein Bewertungsergebnis erzielt. Das Bewertungsergebnis wird dazu genutzt, um mindestens eine Eigenschaft eines Einstelllichtstrahls zu beeinflussen. Unter Verwendung dieser Eigenschaften wird in einem nächsten Schritt ein Einstelllichtstrahl mittels einer Lichtquelle einer Positionierhilfe erzeugt und in einem weiteren Schritt auf das Messobjekt gelenkt, um einen Lichtfleck auf dem Messobjekt zu erzeugen. Durch Beeinflussen mindestens einer Eigenschaft des Einstelllichtstrahls basierend auf einer Bewertung des Eingabewert können aus dem Einstelllichtstrahl und dem damit erzeugten Lichtfleck auf dem Messobjekt Rückschlüsse auf den Eingabewert gezogen werden.

In einer Weiterbildung des Schritts des Bewertens des Eingabewerts wird der Eingabewert mit einem Sollwert und/oder einem Sollbereich verglichen. Durch diesen Vergleich kann festgestellt werden, wie der Eingabewert relativ zu dem Sollwert bzw. Sollbereich liegt. Es versteht sich, dass der Eingabewert und der Sollwert/Sollbereich aufeinander angepasst sein sollten. Dies bedeutet insbesondere, dass Eingabewert und Sollwert/Sollbereich identisch skaliert sind.

In einer Weiterbildung charakterisiert der Sollwert und/oder der Sollbereich einen Abstandsmessbereich des Abstandssensors. In einer Ausgestaltung wird der Einstelllichtstrahl mit einem ersten Satz von Eigenschaften erzeugt, wenn der Eingabewert innerhalb des Abstandsmessbereichs liegt, und mit einem zweiten Satz von Eigenschaften, wenn der Eingabewert außerhalb des Abstandsmessbereichs liegt. Dabei sind der erste Satz und der zweite Satz von Eigenschaften verschieden. Auf diese Weise lässt sich aus dem Einstelllichtstrahl unmittelbar erkennen, ob ein Eingabewert innerhalb oder außerhalb des Abstandsmessbereichs liegt.

In einer anderen Ausgestaltung wird der Einstelllichtstrahl mit einem dritten Satz von Eigenschaften erzeugt, wenn der Eingabewert innerhalb eines charakteristischen Bereichs des Abstandsmessbereichs liegt, und mit einem vierten Satz von Eigenschaften, wenn der Eingabewert außerhalb des charakteristischen Bereichs liegt. Dabei sind dritter und vierter Satz von Eigenschaften von einander verschieden. Ein charakteristischer Bereich des Abstandsmessbereichs ist in einer Ausgestaltung durch einen Messbereichsanfang, in einer anderen Ausgestaltung durch eine Messbereichsmitte und einer noch weiteren Ausgestaltung durch ein Messbereichsende gebildet. Obwohl Messbereichsanfang, Messbereichsmitte und Messbereichsende prinzipiell konkrete Abstandswerte sind, empfiehlt es sich im Zusammenhang mit der vorliegenden Erfindung diese Werte zu einem Bereich zu erweitern. Denn ein Abstandssensor wird sich selten derart präzise positionieren lassen, dass eine Messbereichsmitte, ein Messbereichsanfang oder ein Messbereichsende konkret erreicht wird. Der charakteristische Bereich sollte damit breit genug sein, damit in praktischen Anwendungen eine Positionierung des Abstandssensors bei diesen Werten möglich ist. Gleichzeitig sollte er eng genug sein, um noch ausreichend repräsentativ für den jeweiligen Abstandswert sein zu lassen. Vorzugsweise weicht dabei der charakteristische Bereich nicht mehr als 10% des gesamten Abstandsmessbereichs, besonders bevorzugter Weise nicht mehr als 5% des gesamten Abstandsmessbereichs und ganz besonders bevorzugter Weise nicht mehr als 3% des Abstandsmessbereichs von dem Messbereichsanfang, Messbereichsmitte oder Messbereichsende ab.

Prinzipiell können die genannten Ausgestaltungen eines Vergleichs eines Eingabewerts mit einem Sollwert/Sollbereich auch miteinander kombiniert werden. Dabei ist es denkbar, dass bei einem Eingabewert außerhalb des Abstandsmessbereichs der Einstelllichtstrahl mit einem zweiten Satz von Eigenschaften erzeugt wird, bei einem Eingabewert innerhalb des Abstandsmessbereichs aber außerhalb des charakteristischen Bereichs mit einem ersten Satz von Eigenschaften und bei einem Eingabewert innerhalb des charakteristischen Bereichs des Abstandsmessbereichs mit einem dritten Satz von Eigenschaften. Auf diese Weise können mittels des Einstelllichtstrahls recht detaillierte Informationen über den Eingabewert an einen Einsteller ausgegeben werden, ohne dass ein konkreter Eingabewert dargestellt werden muss.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert, wobei der Schutzumfang der Erfindung allerdings durch die nachfolgenden Ansprüche festgelegt ist. In der Zeichnung zeigen
- Fig. 1: eine schematische Darstellung eines ersten Ausführungsbeispiels eines erfindungsgemäßen Abstandsmesssystems mit einem Abstandssensor in Form eines Interferometrie-Sensors,
- Fig. 2: eine schematische Darstellung eines Ausführungsbeispiels einer erfindungsgemäßen Positionierhilfe,
- Fig. 3: eine schematische Darstellung eines zweiten Ausführungsbeispiels eines erfindungsgemäßen Abstandsmesssystems mit einem Abstandssensor in Form eines Triangulationssensors,
- Fig. 4: ein Diagramm mit einem beispielhaften Verlauf einer Variation der Impulsdauer und/oder des Tastgrades eines Einstelllichtstrahls,
- Fig. 5: ein Diagramm mit einem beispielhaften Verlauf einer Intensität durch Variation eines Tastgrades in Abhängigkeit von einem Messweg x
- Fig. 6: ein Diagramm mit einem beispielhaften Verlauf einer Intensität in Abhängigkeit von einem Messweg x und
- Fig. 7: ein Diagramm mit einem beispielhaften Verlauf einer Variation der Wellenlänge eines Einstelllichtstrahls.

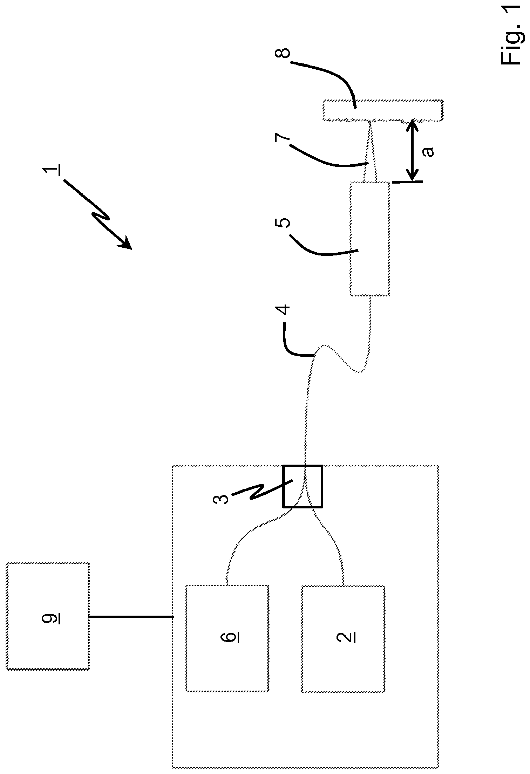

Fig. 1 zeigt eine schematische Darstellung eines ersten Ausführungsbeispiels eines erfindungsgemäßen Abstandsmesssystems. Das Abstandsmesssystem 1 umfasst einen Abstandssensor 2 in Form eines Weißlichtinterferometrie-Sensors, der ein polychromatisches Messlicht im nahen Infrarotbereich (NIR) erzeugt. Der Messlichtstrahl wird mittels eines Lichtwellenleiters zu einem optischen Koppler 3 geleitet, an dessen Ausgang ein Lichtwellenleiter 4 angeordnet ist. Der Lichtwellenleiter 4 leitet den Messlichtstrahl zu einem Messkopf 5 weiter. Ein zweiter Eingang des optischen Kopplers 3 ist mit einer Positionierhilfe 6 verbunden, die einen Einstelllichtstrahl erzeugt und über den optischen Koppler 3 und den Lichtwellenleiter 4 ebenfalls an den Messkopf 5 ausgibt. Der Messkopf 5 strahlt einen Beleuchtungslichtstrahl 7 an ein Messobjekt 8 ab, wobei der Beleuchtungslichtstrahl 7 eine Summe des Messlichtstrahls und des Einstelllichtstrahls ist. Da der Messlichtstrahl und Einstelllichtstrahl dieselbe Messoptik verwenden, sind beide Lichtstrahlen koaxial zueinander angeordnet. Der Beleuchtungslichtstrahl 7 wird an der Oberfläche des Messobjekts 8 reflektiert. Der spektrale Anteil des Beleuchtungslichtstrahls 7, der auf die Oberfläche des Messobjekts 8 fokussiert ist, gelangt über den Messkopf 5, den Lichtwellenleiter 4 und den optischen Koppler 3 zurück in den Abstandssensor 2. Aus dem empfangenen spektralen Anteil wird auf den Abstand a zu dem Messobjekt 8 geschlossen. Eine Auswerteeinheit 9 dient dem Auswerten, Speichern und Darstellen von Messwerten für einen Nutzer.

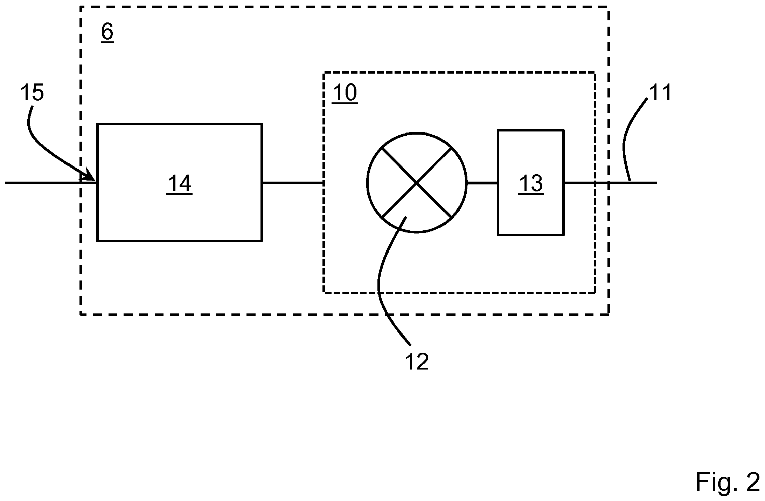

In Fig. 2 ist die Positionierhilfe 6 nochmals detaillierter dargestellt. Die Positionierhilfe 6 weist eine Lichtquelle 10 auf, die einen Einstelllichtstrahl 11 erzeugt und ausgibt. Die Lichtquelle 10 selbst umfasst einen Lichterzeuger 12 und ein optisches Mittel 13. Der Lichterzeuger 12 kann durch eine LED oder eine Laser-Diode gebildet sein. Das optische Mittel 13 kann eine Fokussiereinrichtung umfassen oder ein weiteres optisches Mittel zum Beeinflussen mindestens einer optischen Eigenschaft des Einstelllichtstrahls 11. Die Positionierhilfe 6 weist zusätzlich eine Steuereinheit 14 auf, die kommunizierend mit der Lichtquelle 10 verbunden ist. Die Steuereinheit 14 weist zusätzlich einen Abstandseingang auf, in dem ein für einen gemessenen Abstand repräsentativer Eingabewert eingegeben werden kann.

Beim Betrieb des Abstandsmesssystems 1 erzeugt der Abstandssensor 2 einen Abstandsmesswert, indem der Abstand a zu dem Messobjekt 8 gemessen wird. Dieser Abstandsmesswert wird - eventuell unter Verwendung der Auswerteeinheit 9 - in den Abstandseingang 15 der Steuereinheit 14 eingegeben. Die Steuereinheit 14 ist dazu ausgebildet, den eingegebenen Eingabewert zu bewerten und basierend auf einem Bewertungsergebnis mindestens eine Eigenschaft des Einstelllichtstrahls zu beeinflussen, sodass der Einstelllichtstrahl Rückschlüsse auf den Eingabewert erlaubt. Durch die koaxiale Anordnung des Messlichtstrahls und des Einstelllichtstrahls kann durch einen Lichtfleck, der durch den Einstelllichtstrahl auf der Oberfläche des Messobjekts 8 erzeugt wird, auf den lateralen Messbereich des Abstandssensors 2 geschlossen werden. Auch wenn der Messlichtstrahl außerhalb des sichtbaren Bereichs liegt, kann durch den Einstelllichtstrahl 11 im sichtbaren Bereich und durch die Beeinflussung mindestens einer Eigenschaft des Einstelllichtstrahls basierend auf dem Eingabewert auf eine korrekte Positionierung des Abstandsmesssystems 1 relativ zu dem Messobjekt 8 geschossen werden.

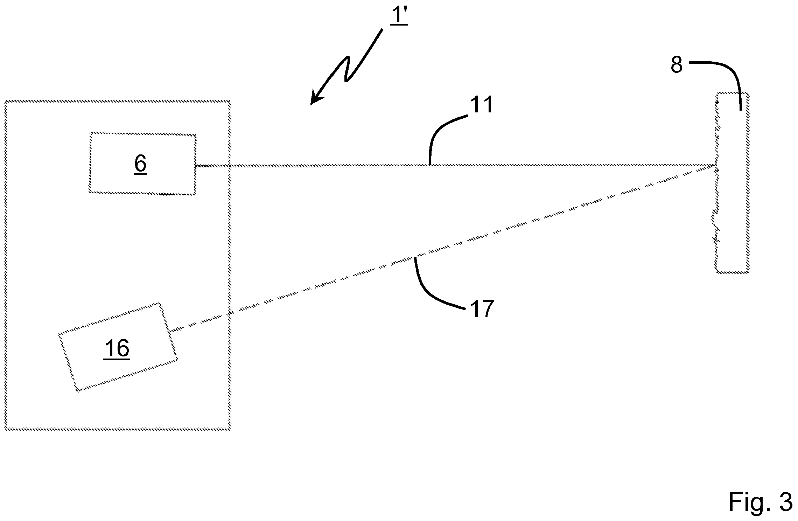

Fig. 3 stellt ein zweites Ausführungsbeispiel eines erfindungsgemäßen Abstandsmesssystems 1' schematisch dar, wobei der Abstandssensor als Triangulationssensor 16 ausgebildet ist. Der Übersichtlichkeit wegen ist lediglich die Lichtquelle zum Erzeugen des Messlichtstrahls 17, nicht aber die Detektionseinheit des Sensors dargestellt. Auch in diesem Ausführungsbeispiel ist eine Positionierhilfe 6 vorhanden, die einen Einstelllichtstrahl 11 erzeugt und in Richtung des Messobjekts 8 abstrahlt. Da Beleuchtungslichtstrahl 11 und Messlichtstrahl 17 ein Dreieck bilden, kennzeichnet der Einstelllichtstrahl den lateralen Messbereich des Triangulationssensors 16 lediglich grob. Allerdings ist der Messlichtstrahl 17 eines Triangulationssensors 16 im sichtbaren Bereich, sodass der laterale Messbereich des Abstandsmesssystems 1' aus dem Messlichtstrahl 17 ersichtlich ist. Der Einstelllichtstrahl 11 dient in diesem Fall ausschließlich zum Erkennbarmachen des Abstandsmessbereichs.

In einer Weiterbildung dieses zweiten Ausführungsbeispiels kann ein optischer Koppler wie bei dem ersten Ausführungsbeispiel genutzt werden, der den Messlichtstrahl und den Einstelllichtstrahl beispielsweise koaxial koppelt. Es ist auch denkbar, dass keine separate Positionierhilfe verwendet wird, sondern dass die Positionierhilfe integraler Bestandteil des Triangulationssensors ist, d.h. der Messlichtstrahl wird in einem Einstellmodus als Einstelllichtstrahl genutzt und beispielsweise abhängig von einem gemessenen Abstand in seiner Intensität variiert.

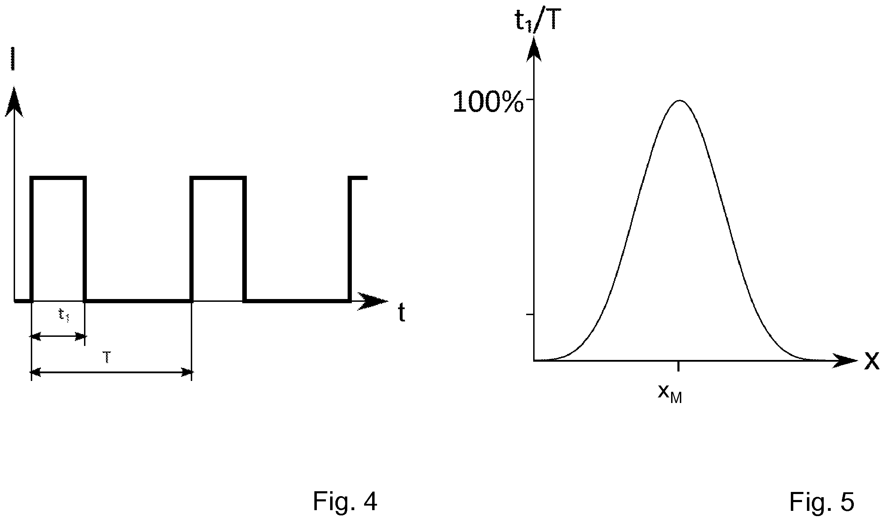

In den Figuren 4 bis 7 sind beispielhaft vier Möglichkeiten dargestellt, wie eine Eigenschaft des Einstelllichtstrahls verändert werden kann. In Fig. 4 wird die Intensität des Einstelllichtstrahls über der Zeit zwischen einem oberen Intensitätswert I₀ und einem Intensitätswert gleich 0 variiert. Dabei kann die Periodenlänge T der Variation und damit die Variationsfrequenz abhängig von einem gemessen Abstandswert gewählt werden.

In Fig. 5 ist eine andere Veränderung der Intensität in Abhängigkeit von einem Messweg x dargestellt, nämlich durch Verändern des Tastgrades t₁/T. Dabei bezeichnet t₁ die Zeitspanne, während der die Intensität einen oberen Intensitätswert I₀ annimmt. Die Periodenlänge T kann konstant gehalten werden. Je weiter ein gemessener Abstand von der Messbereichsmitte x_{M} abweicht, desto kürzer nimmt die Intensität den oberen Intensitätswert I₀ an. Bei einem Tastgrad von 100 % wird dauerhaft der obere Intensitätswert I₀ genutzt. Bei einer Periodenlänge T im Sekundenbereich entsteht auf diese Weise ein Einstelllichtstrahl, der bei Erreichen der Messbereichsmitte immer weniger pulsiert. Bei kurzen Periodenlängen, beispielsweise im Bereich von 10 Millisekunden oder darunter, erscheint der Einstelllichtstrahl immer heller zu werden, je näher der Messweg an die Messbereichsmitte x_{M} kommt.

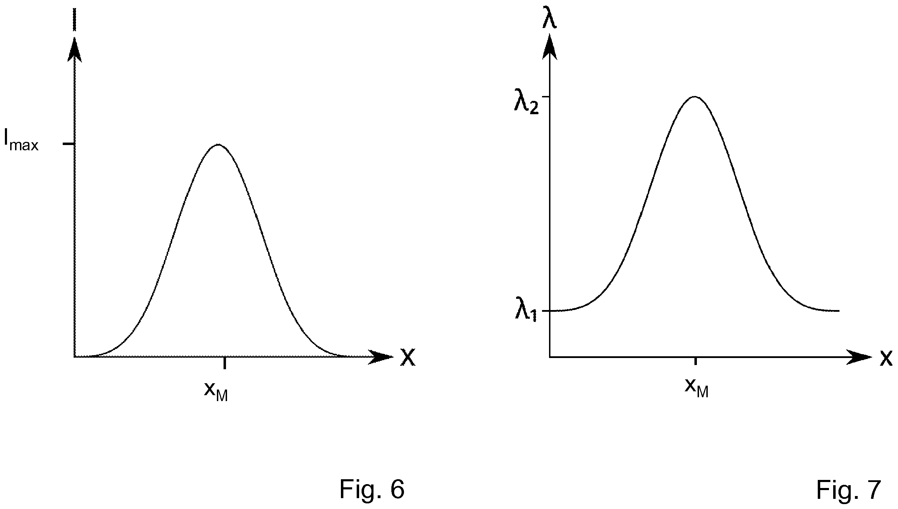

In Fig. 6 wird die Intensität I in Abhängigkeit von einem Messweg x verändert. Im Bereich einer Messbereichsmitte x_{M} wird eine maximale Intensität Iₘₐₓ des Einstelllichtstrahls erreicht. Je weiter ein gemessener Abstand von der Messbereichsmitte x_{M} abweicht, desto weiter sinkt die Intensität I ab. In dem dargestellten Beispiel hat die Intensität eine Abhängigkeit von dem Messwert in Form einer Glockenkurve.

In Fig. 7 ist eine recht ähnliche Abhängigkeit dargestellt. Allerdings wird hier die Wellenlänge λ des Einstelllichtstrahls abhängig vom Messweg x kontinuierlich (oder quasikontinuierlich) zwischen einem unteren Wellenlängenwert λ₁ und einem oberen Wellenlängenwert λ₂ variiert. Dabei wird der obere Wellenlängenwert λ₂ bei der Messbereichsmitte x_{M} erreicht.

Hinsichtlich weiterer vorteilhafter Ausgestaltungen der erfindungsgemäßen Positionierhilfe und des erfindungsgemäßen Abstandsmesssystems wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht die Ausführungsbeispiele einschränken. Der Schutzumfang der Erfindung wird nur durch die nachfolgenden Ansprüche eingeschränkt.

### Bezugszeichenliste

- 1: Abstandsmesssystem
- 2: Abstandssensor
- 3: Optischer Koppler
- 4: Lichtwellenleiter
- 5: Messkopf
- 6: Positionierhilfe
- 7: Beleuchtungslichtstrahl
- 8: Messobjekt
- 9: Auswerteeinheit
- 10: Lichtquelle
- 11: Einstelllichtstrahl
- 12: Lichterzeuger
- 13: Optisches Mittel
- 14: Steuereinheit (der Positionierhilfe)
- 15: Abstandseingang
- 16: Triangulationssensor
- 17: Messlichtstrahl

## Patentansprüche

1. Abstandsmesssystem umfassend:
einen Abstandssensor (2, 16) zum Messen eines Abstands (a) zwischen dem Abstandssensor (2, 16) und einem Messobjekt (8) und
eine optische Positionierhilfe (6) für den Abstandssensor (2, 16) zum Unterstützen eines Positionierens des Abstandssensors (2, 16) relativ zu einem Messobjekt (8),
wobei der Abstandssensor (2, 16) und die Positionierhilfe (6) zwei separate Einheiten sind,
mit der Positionierhilfe (6) umfassend:
eine Lichtquelle (10) eingerichtet zum Erzeugen eines Einstelllichtstrahls (11), wobei der Einstelllichtstrahl (11) eine Wellenlänge (λ) im sichtbaren Bereich aufweist und zum Erzeugen eines Lichtflecks auf einem Messobjekt (8) geeignet ist, und
eine Steuereinheit (14), die einen Abstandseingang (15) aufweist und zum Steuern mindestens einer Eigenschaft des Einstelllichtstrahls (11) kommunizierend mit der Lichtquelle (10) verbunden ist,
wobei die Steuereinheit (14) dazu ausgebildet ist, einen in den Abstandseingang (15) eingegebenen Eingabewert zu bewerten und basierend auf einem Bewertungsergebnis mindestens eine Eigenschaft des Einstelllichtstrahls derart zu beeinflussen, dass der Einstelllichtstrahl (11) Rückschlüsse auf den Eingabewert erlaubt,
wobei der Abstandssensor (2, 16) kommunizierend mit der Positionierhilfe (6) verbunden ist und einen Eingabewert, der repräsentativ für einen gemessenen Abstandswert ist, in den Abstandseingang (15) der Positionierhilfe (6) eingibt,
wobei der Abstandssensor (2, 16) durch einen optischen Sensor gebildet ist und zum Aussenden eines Messlichtstrahls eingerichtet ist,
wobei ein optischer Koppler (3) so angeordnet ist, dass der optische Koppler (3) den durch den Abstandssensor (2) ausgesendeten Messlichtstrahl und den Einstelllichtstrahl (11) derart koppelt, dass Messlichtstrahl und Einstelllichtstrahl (11) mittels eines gemeinsamen optischen Mittels zu dem Messobjekt (8) lenkbar sind.

2. Abstandsmesssystem nach Anspruch 1, **dadurch gekennzeichnet, dass** die mindestens eine Eigenschaft des Einstelllichtstrahls (11) eine Wellenlänge (λ), eine Intensität (I), ein Variationsmuster und/oder eine Variationsfrequenz des Einstelllichtstrahls (11) umfasst.

3. Abstandsmesssystem nach Anspruch 1 oder 2, **dadurch gekennzeichnet, dass** die Lichtquelle (10) einen Lichterzeuger (12), vorzugsweise eine lichtemittierende Diode oder eine Laser-Diode, und vorzugsweise eine Fokussiereinrichtung zum Beeinflussen des Strahlengangs des Einstelllichtstrahls umfasst.

4. Abstandsmesssystem nach einem der Ansprüche 1 bis 3, **dadurch gekennzeichnet, dass** die Lichtquelle (10) ein optisches Mittel (13) umfasst, mittels dessen die mindestens eine Eigenschaft des Einstelllichtstrahls beeinflussbar ist.

5. Abstandsmesssystem nach einem der Ansprüche 1 bis 4, **dadurch gekennzeichnet, dass** der Eingabewert durch einen Abstandsmesswert, ein für einen gemessenen Abstand repräsentatives Bewertungsmaß oder eine Differenz eines Abstandsmesswerts relativ zu einem Referenzpunkt in einem Abstandsmessbereich des Abstandssensors gebildet ist.

6. Abstandsmesssystem nach einem der Ansprüche 1 bis 5, **dadurch gekennzeichnet, dass** der Einstelllichtstrahl (11) derart relativ zu dem Abstandssensor (2, 16) angeordnet ist, dass der Einstelllichtstrahl (11) einen lateralen Messbereich des Abstandssensors (2, 16) kennzeichnet.

7. Abstandsmesssystem nach einem der Ansprüche 1 bis 6, **dadurch gekennzeichnet, dass** der optische Sensor als Interferometrie-Sensor (2), als konfokalchromatischer Sensor oder als Triangulationssensor (16) ausgebildet ist.

8. Abstandsmesssystem nach Anspruch 7, **dadurch gekennzeichnet, dass** das gemeinsame optische Mittel durch einen Lichtwellenleiter (4) gebildet ist.

9. Verfahren zum Unterstützen eines Positionierens eines Abstandssensors relativ zu einem Messobjekt unter Verwendung eines Abstandsmesssystems nach einem der Ansprüche 1 bis 8 umfassend die Schritte:
Erzeugen eines Eingabewerts durch Messen eines Abstands (a) zwischen dem Messobjekt (8) und dem Abstandssensor (2, 16),
Bewerten des Eingabewerts zum Erzeugen eines Bewertungsergebnisses,
Erzeugen eines Einstelllichtstrahls (11) mittels einer Lichtquelle (10) einer Positionierhilfe (6) und
Lenken des Einstelllichtstrahls (11) auf das Messobjekt (8) zum Erzeugen eines Lichtflecks auf dem Messobjekt (8),
wobei mindestens eine Eigenschaft des Einstelllichtstrahls (11) basierend auf dem Bewertungsergebnis derart beeinflusst wird, dass der Einstelllichtstrahl (11) Rückschlüsse auf den Eingabewert erlaubt.

10. Verfahren nach Anspruch 9, **dadurch gekennzeichnet, dass** der Eingabewert bei dem Schritt des Bewertens des Eingabewertes mit einem Sollwert und/oder einem Sollbereich verglichen wird.

11. Verfahren nach Anspruch 10, **dadurch gekennzeichnet, dass** der Sollwert und/oder der Sollbereich einen Abstandsmessbereich des Abstandssensors (2, 16) charakterisiert, wobei bei einem Eingabewert innerhalb des Abstandsmessbereichs der Einstelllichtstrahl (11) mit einem ersten Satz von Eigenschaften und bei einem Eingabewert außerhalb des Abstandsmessbereichs der Einstelllichtstrahl (11) mit einem zweiten Satz von Eigenschaften erzeugt wird, wobei der erste und der zweite Satz von Eigenschaften voneinander verschieden sind.

12. Verfahren nach Anspruch 10 oder 11, **dadurch gekennzeichnet, dass** der Sollwert und/oder der Sollbereich einen Abstandsmessbereich des Abstandssensors (2, 16) charakterisiert, wobei bei einem Eingabewert innerhalb eines charakteristischen Bereichs des Abstandsmessbereichs, vorzugsweise einem Messbereichsanfang, einer Messbereichsmitte oder einem Messbereichsende, der Einstelllichtstrahl (11) mit einem dritten Satz von Eigenschaften und bei einem Eingabewert außerhalb des charakteristischen Bereichs der Einstelllichtstrahl (11) mit einem vierten Satz von Eigenschaften erzeugt wird, wobei der dritte und der vierte Satz von Eigenschaften voneinander verschieden sind.

## Claims

1. Distance measurement system comprising
a distance sensor (2, 16) for measuring a distance (a) between the distance sensor (2, 16) and a measurement object (8) and
an optical auxiliary positioning member (6) for the distance sensor (2, 16) in order to support positioning of the distance sensor (2, 16) relative to a measurement object (8), wherein the distance sensor (2, 16) and the auxiliary positioning member (6) are two separate units, with the auxiliary positioning member comprising:
a light source (10) which is configured to produce an adjustment light beam (11), wherein the adjustment light beam (11) has a wavelength (λ) in the visible range and is suitable for producing a light spot on a measurement object (8), and
a control unit (14) which has a distance input (15) and which, in order to control at least one property of the adjustment light beams (11), is connected to the light source (10) so as to communicate,
wherein the control unit (14) is constructed to evaluate an input value which is input into the distance input (15) and, based on an evaluation result, to influence at least one property of the adjustment light beam in such a manner that the adjustment light beam (11) enables conclusions relating to the input value,
wherein the distance sensor (2, 16) is connected to the auxiliary positioning member (6) so as to communicate and inputs an input value which is representative of a measured distance value into the distance input (15) of the auxiliary positioning member (6),
wherein the distance sensor (2, 16) is formed by an optical sensor and is configured to transmit a measurement light beam, wherein an optical coupler (3) is arranged in such a manner that the optical coupler (3) couples the measurement light beam transmitted by the distance sensor (2) and the adjustment light beam (11) in such a manner that the measurement light beam and adjustment light beam (11) can be directed by means of a common optical means to the measurement object (8).

2. Distance measurement system according to claim 1, **characterised in that** the at least one property of the adjustment light beam (11) comprises a wavelength (λ), an intensity (I), a variation pattern and/or a variation frequency of the adjustment light beam (11).

3. Distance measurement system according to claim 1 or 2, **characterised in that** the light source (10) comprises a light generator (12), preferably a light-emitting diode or a laser diode, and preferably a focusing device for influencing the beam path of the adjustment light beam.

4. Distance measurement system according to any one of claims 1 to 3, **characterised in that** the light source (10) comprises an optical means (13), by way of which the at least one property of the adjustment light beam can be influenced.

5. Distance measurement system according to any one of claims 1 to 4, **characterised in that** the input value is formed by means of a distance measurement value, an evaluation quantity which is representative of a measured distance or a difference of a distance measurement value relative to a reference point in a distance measurement range of the distance sensor.

6. Distance measurement system according to any one of claims 1 to 5, **characterised in that** the adjustment light beam (11) is arranged in such a manner relative to the distance sensor (2, 16) that the adjustment light beam (11) identifies a lateral measurement range of the distance sensor (2, 16).

7. Distance measurement system according to any one of claims 1 to 6, **characterised in that** the optical sensor is in the form of an interferometry sensor (2), a confocal chromatic sensor or a triangulation sensor (16).

8. Distance measurement system according to claim 7, **characterised in that** the common optical means is formed by an optical waveguide (4).

9. Method for supporting a positioning of a distance sensor relative to a measurement object using a distance measurement system according to any one of claims 1 to 8, comprising the steps of:
producing an input value by measuring a distance (a) between the measurement object (8) and the distance sensor (2, 16), evaluating the input value in order to produce an evaluation result,
producing an adjustment light beam (11) by means of a light source (10) of an auxiliary positioning member (6) and directing the adjustment light beam (11) onto the measurement object (8) in order to generate a light spot on the measurement object (8),
wherein at least one property of the adjustment light beam (11) is influenced based on the evaluation result in such a manner that the adjustment light beam (11) enables conclusions relating to the input value.

10. Method according to claim 9,
**characterised in that** the input value during the step of evaluating the input value is compared with a desired value and/or a desired range.

11. Method according to claim 10, **characterised in that** the desired value and/or the desired range characterises a distance measurement range of the distance sensor (2, 16), wherein in the case of an input value within the distance measurement range the adjustment light beam (11) is produced with a first set of properties and in the case of an input value outside the distance measurement range the adjustment light beam (11) is produced with a second set of properties, wherein the first set and the second set of properties are different from each other.

12. Method according to claim 10 or 11, **characterised in that** the desired value and/or the desired range characterises a distance measurement range of the distance sensor (2, 16), wherein in the case of an input value within a characteristic range of the distance measurement range, preferably a measurement range start, a measurement range middle or a measurement range end, the adjustment light beam (11) is produced with a third set of properties and in the case of an input value outside the characteristic range the adjustment light beam (11) is produced with a fourth set of properties, wherein the third set and the fourth set of properties are different from each other.

## Revendications

1. Système de mesure de distance comprenant :
un capteur de distance (2, 16) pour la mesure d'une distance (a) entre le capteur de distance (2, 16) et un objet de mesure (8) et
une aide au positionnement optique (6) pour le capteur de distance (2, 16) pour l'assistance au positionnement du capteur de distance (2, 16) par rapport à un objet de mesure (8), dans lequel le capteur de distance (2, 16) et l'aide au positionnement (6) sont deux unités séparées,
l'aide au positionnement (6) comprenant :
une source de lumière (10) conçue pour la production d'un faisceau de lumière de réglage (11), dans lequel le faisceau de lumière de réglage (11) présente une longueur d'onde (λ) dans le domaine visible et est conçu pour la production d'une tache lumineuse sur un objet de mesure (8) et
une unité de commande (14) qui comprend une entrée de distance (15) et qui est reliée, pour le contrôle d'une propriété du faisceau de lumière de réglage (11), de façon à communiquer avec la source de lumière (10),
dans lequel l'unité de commande (14) est conçue pour évaluer une valeur d'entrée saisie dans l'entrée de distance (15) et, sur base d'un résultat d'évaluation, d'influencer la propriété du faisceau de lumière de réglage de sorte que le faisceau de lumière de réglage (11) permet de faire des déductions concernant la valeur d'entrée,
dans lequel le capteur de distance (2, 16) est relié de façon à communiquer avec l'aide au positionnement (6) et entre une valeur d'entrée, qui représente une valeur de distance mesurée, dans l'entrée de distance (15) de l'aide au positionnement (6),
dans lequel le capteur de distance (2, 16) est constitué d'un capteur optique pour l'émission d'un faisceau de lumière de mesure,
dans lequel un coupleur optique (3) est disposé de sorte que le coupleur optique (3) couple le faisceau de lumière de mesure émis par le capteur de distance (2) et le faisceau de lumière de réglage de sorte que le faisceau de lumière de mesure et le faisceau de lumière de réglage (11) peuvent être déviés à l'aide d'un moyen optique commun vers l'objet de mesure (8).

2. Système de mesure de distance selon la revendication 1, **caractérisé en ce que** l'au moins une propriété du faisceau de lumière de réglage (11) comprend une longueur d'onde (λ), une intensité (I), un motif de variation et/ou une fréquence de variation du faisceau de lumière de réglage (11).

3. Système de mesure de distance selon la revendication 1 ou 2, **caractérisé en ce que** la source de lumière (10) comprend un générateur de lumière (12), de préférence une diode électroluminescente ou une diode laser et de préférence un dispositif de focalisation pour influencer le trajet du faisceau de lumière de réglage.

4. Système de mesure de distance selon l'une des revendications 1 à 3, **caractérisé en ce que** la source de lumière (10) comprend un moyen optique (13) à l'aide duquel l'au moins une propriété du faisceau de lumière de réglage peut être influencée.

5. Système de mesure de distance selon l'une des revendications 1 à 4, **caractérisé en ce que** la valeur d'entrée est constituée d'une valeur de mesure de distance, d'une dimension d'évaluation représentant une distance mesurée ou d'une différence d'une valeur de mesure de distance par rapport à un point de référence dans une zone de mesure de distance du capteur de distance.

6. Système de mesure de distance selon l'une des revendications 1 à 5, **caractérisé en ce que** le faisceau de lumière de réglage (11) est disposé par rapport au capteur de distance (2, 16) de sorte que le faisceau de lumière de réglage (11) caractérise une zone de mesure latérale du capteur de distance (2, 16).

7. Système de mesure de distance selon l'une des revendications 1 à 6, **caractérisé en ce que** le capteur optique est conçu comme un capteur à interférométrie (2), comme un capteur confocal chromatique ou comme un capteur de triangulation (16).

8. Système de mesure de distance selon la revendication 7, **caractérisé en ce que** le moyen optique commun est constitué d'une fibre optique (4).

9. Procédé d'assistance au positionnement d'un capteur de distance par rapport à un objet de mesure à l'aide d'un système de mesure de distance selon l'une des revendications 1 à 8, comprenant les étapes suivantes :
production d'une valeur d'entrée par la mesure d'une distance (a) entre l'objet de mesure (8) et le capteur de distance (2, 16),
évaluation de la valeur d'entrée pour la production d'un résultat d'évaluation,
production d'un faisceau de lumière de réglage (11) au moyen d'une source de lumière (10) d'une aide au positionnement (6) et
déviation du faisceau de lumière de réglage (11) vers l'objet de mesure (8) pour la production d'une tache lumineuse sur l'objet de mesure (8),
dans lequel au moins une propriété du faisceau de lumière de réglage (11) est influencée sur la base du résultat d'évaluation de sorte que le faisceau de lumière de réglage (11) permet de faire des déductions concernant la valeur d'entrée.

10. Procédé selon la revendication 9, **caractérisé en ce que** la valeur d'entrée, lors de l'étape de l'évaluation de la valeur d'entrée, avec une valeur de consigne et/ou une plage de consigne.

11. Procédé selon la revendication 10, **caractérisé en ce que** la valeur de consigne et/ou la plage de consigne caractérise une zone de mesure de distance du capteur de distance (2, 16), dans lequel, pour une valeur d'entrée à l'intérieur de la plage de mesure de distance, le faisceau de lumière de réglage (11) est généré avec un premier ensemble de propriétés et, pour une valeur d'entrée à l'extérieur de la plage de mesure de distance, le faisceau de lumière de réglage est généré avec un deuxième ensemble de propriétés, dans lequel les premier et deuxième ensembles de propriétés sont différents l'un de l'autre.

12. Procédé selon la revendication 10 ou 11, **caractérisé en ce que** la valeur de consigne et/ou la plage de consigne caractérise une plage de mesure de distance du capteur de distance (2, 16), dans lequel, pour une valeur d'entrée à l'intérieur d'une plage caractéristique de la plage de mesure de distance, de préférence un début de plage de mesure, un centre de plage de mesure ou une fin de plage de mesure, le faisceau de lumière de réglage (11) est généré avec un troisième ensemble de propriétés et, pour une valeur d'entrée à l'extérieur de la plage caractéristique, le faisceau de lumière de réglage (11) est généré avec un quatrième ensemble de propriétés, dans lequel les troisième et quatrième ensembles de propriétés sont différents l'un de l'autre.
